# EUROPÄISCHE PATENTSCHRIFT

(11) **EP 2 137 424 B1**
(45) Veröffentlichungstag und Bekanntmachung des Hinweises auf die Patenterteilung: **16.11.2011**
(21) Anmeldenummer: 08717313.4
(22) Anmeldetag: 03.03.2008
(51) Int. Cl.: F16D 41/06

(54) **FREILAUFRIEMENSCHEIBE**
FREEWHEELING PULLEY
POULIE A COURROIE, A ROUE LIBRE

(30) Priorität: 16.03.2007 DE 202007003925 U
(43) Veröffentlichungstag der Anmeldung: 30.12.2009
(73) Patentinhaber: Schaeffler Technologies GmbH & Co. KG, 91074 Herzogenaurach (DE); Michael, Uwe, 90480 Nürnberg (DE)
(72) Erfinder: MICHAEL, Uwe, 90480 Nürnberg (DE)
(86) Internationale Anmeldenummer: PCT/EP2008/052550
(87) Internationale Veröffentlichungsnummer: WO 2008/113673

(56) Entgegenhaltungen:
- EP-A- 1 429 052
- DE-A1- 10 258 907
- DE-A1- 19 511 188
- DE-A1- 19 535 889

## Beschreibung

### Gebiet der Erfindung

Die Erfindung betrifft eine zur Verwendung in einem Nebenaggregateantrieb einer Brennkraftmaschine geeignete Freilaufriemenscheibe nach dem Oberbegriff des Anspruchs 1.

### Hintergrund der Erfindung

Eine gattungsgemäße, zur Dämpfung von Schwingungen in einem Zugmitteltrieb vorgesehene Freilaufeinheit ist beispielsweise aus der DE 195 35 889 A1 bekannt. Diese Freilaufeinheit umfasst eine Freilaufkupplung sowie zumindest ein Radiallager und ist als vormontiertes Bauteil gestaltet.

Eine weitere Freilaufriemenscheibe ist beispielsweise aus der DE 195 11 188 C2 bekannt. Eine derartige Freilaufriemenscheibe trägt zur Dämpfung von Drehschwingungen in einem eine Hubkolbenbrennkraftmaschine und ein Nebenaggregat verbindenden Zugmitteltrieb bei. Hierbei ist eine Freilaufkupplung zwischen einer von der Brennkraftmaschine antreibbaren Antriebsscheibe und einer Eingangswelle des Nebenaggregats oder zwischen der Kurbelwelle und einer Abtriebsscheibe der Brennkraftmaschine angeordnet. Die Freilaufkupplung kuppelt nur dann ein, wenn die Winkelgeschwindigkeit der das Nebenaggregat antreibenden Welle zunimmt. Dagegen hat die Welle des Nebenaggregats die Möglichkeit, ihr direkt oder indirekt von der Brennkraftmaschine angetriebenes Antriebselement zu überholen, wenn die Winkelgeschwindigkeit der Kurbelwelle der Brennkraftmaschine abnimmt. Somit werden insbesondere bei niedrigen Drehzahlen auftretende Drehzahlschwankungen der Brennkraftmaschine nicht in vollem Umfang an das Nebenaggregat, beispielsweise einen Generator, weitergegeben. Dies trägt wesentlich zur Reduzierung mechanischer Belastungen im Zugmitteltrieb bei. Insgesamt handelt es sich bei der Vorrichtung nach der DE 195 11 188 C2 um eine bewährte Konstruktion.

### Aufgabe der Erfindung

Der Erfindung liegt die Aufgabe zugrunde, eine für einen Nebenaggregateantrieb einer Brennkraftmaschine geeignete Freilaufriemenscheibe gegenüber dem Stand der Technik, insbesondere hinsichtlich Zuverlässigkeit und Lebensdauer, weiter zu verbessern.

### Zusammenfassung der Erfindung

Diese Aufgabe wird erfindungsgemäß gelöst durch eine Freilaufriemenscheibe mit den Merkmalen des Anspruchs 1. Wesentliches Funktionselement dieser Freilaufriemenscheibe ist eine Freilaufeinheit, welche radial zwischen einer Nabe und einer Antriebsscheibe angeordnet ist, wobei die Nabe drehfest mit einer Eingangswelle eines Nebenaggregats einer Brennkraftmaschine verbindbar ist, während die Antriebsscheibe von der Brennkraftmaschine antreibbar ist. Diejenige Stirnseite der Nabe, auf welcher das Nebenaggregat angeordnet ist, wird als erste Stirnseite bezeichnet. Im Gegensatz zu dieser Stirnseite ist die zweite Stirnseite der Nabe mit einem mit der Antriebsscheibe verbundenen Deckel abgedecht. Ein Innenring und ein Außenring der Freilaufeinheit weisen auf der der zweiten Stirnseite der Nabe und damit gegebenenfalls dem Deckel zugewandten Seite der Freilaufeinheit jeweils einen umlaufenden Bord auf. Dabei ist der Bord des mit der Nabe verbundenen Innenrings radial nach außen gerichtet, während der Bord des mit der Antriebsscheibe verbundenen Außenrings radial nach innen gerichtet ist. Der letztgenannte Bord ist geringer von der Stirnseite der Nabe beabstandet als der nach außen gerichtete Bord des Innenrings und schlägt an einem durch die Nabe gebildeten Absatz an. Überraschenderweise hat sich gezeigt, dass damit Ölverluste der Freilaufeinheit signifikant reduziert werden.

Die Freilaufeinheit ist vorzugsweise als Klemmrollenfreilauf gestaltet, insbesondere als Freilauf mit integrierter Lagerung, wobei zu beiden Seiten der Klemmrollen jeweils eine Reihe Wälzkörper, insbesondere Nadeln oder Rollen, angeordnet ist. Der Außenring sowie der Innenring der Freilaufeinheit sind rationell durch spanlose Umformung herstellbar.

Nach einer bevorzugten Ausgestaltung ist mit der Antriebsscheibe eine Anlaufscheibe verbunden, an welcher der radial nach innen gerichtete Bord des Außenrings anschlägt.

Zusätzlich zur direkt oder indirekt an der Antriebsscheibe befestigten Anlaufscheibe ist im selben axialen Bauraum, radial innerhalb der Anlaufscheibe, platzsparend ein Dichtring anordenbar. Eine Dichtung an der entsprechenden Stelle kann auch in Ausführungsformen vorgesehen sein, welche keine Anlaufscheibe aufweisen. In diesem Fall ist diese Dichtung vorzugsweise mit einem weiteren, auf der dem Nebenaggregat zugewandten Seite der Freilaufeinheit angeordneten Dichtring austauschbar.

Nachfolgend werden zwei Ausführungsbeispiele der Erfindung anhand einer Zeichnung näher erläutert. Hierin zeigen:

### Kurze Beschreibung der Zeichnung

- Figur 1: ausschnittsweise ein erstes Ausführungsbeispiel einer Freilaufriemenscheibe, und
- Figur 2: in einer Ansicht analog Figur 1 ein zweites Ausführungsbeispiel einer Freilaufriemenscheibe.

### Ausführliche Beschreibung der Zeichnung

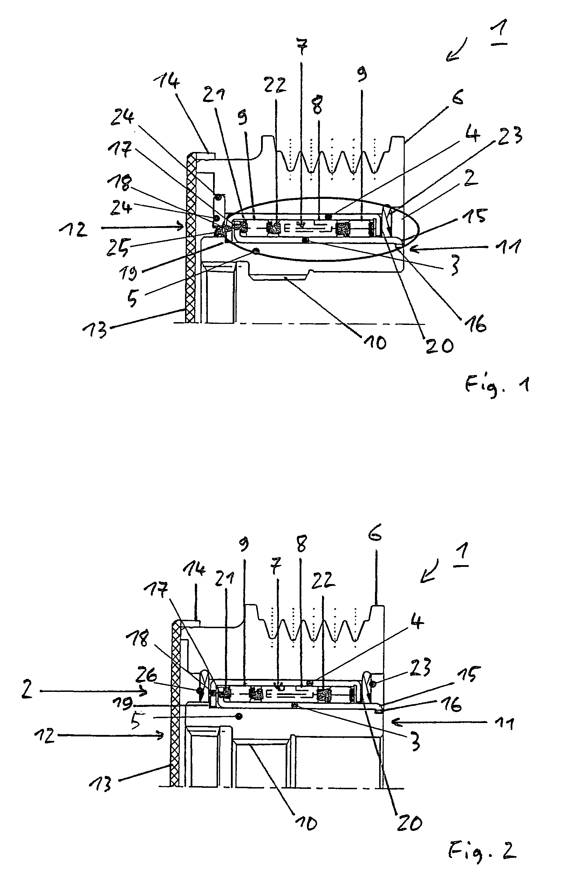

Die Figuren 1 und 2 zeigen jeweils in einer vereinfachten Schnittdarstellung eine für einen Nebenaggregateantrieb einer Brennkraftmaschine geeignete Freilaufriemenscheibe 1, wobei einander entsprechende oder gleichwirkende Teile in beiden Figuren mit den gleichen Bezugszeichen gekennzeichnet sind. Hinsichtlich der prinzipiellen Funktion einer Freilaufriemenscheibe wird auf den eingangs zitierten Stand der Technik verwiesen. Die weiteren Ausführungen beziehen sich, soweit nicht anders erwähnt, auf beide Ausführungsbeispiele.

Die Freilaufriemenscheibe 1 umfasst als funktionelles Kernstück eine Freilaufeinheit 2 mit einem Innenring 3 und einem Außenring 4, welche als spanlos umgeformte Blechteile hergestellt sind. Der Innenring 3 ist auf eine Nabe 5 aufgepresst, während der Außenring 4 drehfest mit einer Antriebsscheibe 6, nämlich einer Riemenscheibe, verbunden ist. Im zwischen dem Innenring 3 und dem Außenring 4 gebildeten Ringraum 7 sind eine Reihe Klemmelemente 8, nämlich Klemmrollen, sowie diesen beidseitig benachbart jeweils eine Reihe Wälzkörper 9, nämlich Rollen, angeordnet. Die Freilaufeinheit 2 bildet somit einen Klemmrollenfreilauf mit integrierter Lagerung. In die Außenoberfläche des Innenrings 3 sind in den Figuren nicht sichtbare Klemmrampen eingeformt, die mit den Klemmrollen 8 zusammenwirken.

Die Nabe 5 weist ein Innengewinde 10 auf, in welches eine nicht dargestellte Eingangswelle eines über die Antriebsscheibe 6 und die Freilaufeinheit 2 antreibbaren Nebenaggregats einschraubbar ist. Im komplett montierten Zustand befindet sich das Nebenaggregat, insbesondere ein Generator, auf der in den Figuren rechten Seite der Freilaufriemenscheibe 1. Die auf der entsprechenden Seite angeordnete, d.h. dem Nebenaggregat zugewandete, Stirnseite der Nabe 5 wird als erste Stirnseite 11 oder generatorseitige Stirnseite bezeichnet. Die gegenüber liegende, zweite Stirnseite 12 der Nabe 5 wird auch als frontseitige Stirnseite bezeichnet. Dieser Stirnseite 12 vorgelagert ist ein Deckel 13, welcher mit einem Rand 14 an der Antriebsscheibe 6 befestigt ist.

Der Innenring 3 schließt generatorseitig mit einer radial nach innen gebogenen Schulter 15 ab, welche in einen ringförmigen Absatz 16 an der ersten Stirnseite 11 der Nabe 5 eingreift. Auf der gegenüber liegenden, der zweiten Stirnseite 12 benachbarten Seite weist der Innenring 3 einen radial nach außen gerichteten Bord 17 auf. Dieser wird umgriffen von einem radial nach innen gerichteten Bord 18 des Außenrings 4. Der letztgenannte Bord 18 schlägt an einem ringförmig umlaufenden Absatz 19 der Nabe an, wobei der Durchmesser der Nabe 5 im frontseitigen Bereich, d.h. im dem Deckel 13 zugewandten Bereich, größer ist als der Innendurchmesser des Bords 18. Der Bord 17 des Innenrings 3 ist dem Bord 18 des Außenrings 4 unmittelbar benachbart und bildet eine axiale Begrenzung des Ringraums 7. Eine weitere axiale Begrenzung des Ringraums 7 ist durch einen generatorseitigen, d.h. nahe der ersten Stirnseite 11 angeordneten, radial nach innen gerichteten Bord 20 des Außenrings 4 gebildet. Innerhalb des Ringraums 7 befindet sich, an den Bord 17 des Innenrings bzw. an den Bord 20 des Außenrings anschlagend, jeweils ein Klemmrollen 9 führender Wälzlagerkäfig 21. Axial zwischen den Wälzlagerkäfigen 21 ist ein die Klemmelemente 8 aufnehmender Freilaufkäfig 22 angeordnet.

Auf der der ersten Stirnseite 11 der Nabe 5 zugewandten Seite der Freilaufeinheit 2 ist dem Bord 20 des Außenrings 4 ein Dichtring 23 vorgelagert. Der Dichtring 23 ist an der Antriebsscheibe 6 befestigt und bildet eine schleifende, die äußere Oberfläche des Innenrings 3 nahe der Schulter 15 kontaktierende Dichtung.

Auf der dem Dichtring 23 gegenüber liegenden Seite der Freilaufeinheit 2, d.h. auf der Frontseite der Freilaufeinheit 2, befindet sich im Ausführungsbeispiel nach Fig. 1 eine fest mit der Antriebsscheibe 6 verbundene, dem Bord 18 des Außenrings 4 unmittelbar benachbarte Anlaufscheibe 24. Radial zwischen der Anlaufscheibe 24 und der Nabe 5 ist ein frontseitiger Dichtring 25 angeordnet.

Im Unterschied zum Ausführungsbeispiel nach Figur 1 ist im Ausführungsbeispiel nach Figur 2 keine Anlaufscheibe vorhanden. An der entsprechenden Stelle befindet sich ein frontseitiger Dichtring 26, der hinsichtlich Material und Abmessungen mit dem generatorseitigen Dichtring 23 identisch ist. Die Funktion der Anlaufscheibe 24 wird nicht benötigt, da die axiale Position des radial nach innen gerichteten Bords 18 relativ zur Nabe 5 durch den Absatz 19 sowie den radial nach außen gerichteten Bord 17 mit geringem Spiel festgelegt ist.

### Bezugszeichen liste

- 1: Freilaufriemenscheibe
- 2: Freilaufeinheit
- 3: Innenring
- 4: Außenring
- 5: Nabe
- 6: Antriebsscheibe
- 7: Ringraum
- 8: Klemmelement
- 9: Wälzkörper
- 10: Innengewinde
- 11: erste Stirnseite
- 12: zweite Stirnseite
- 13: Deckel
- 14: Rand
- 15: Schulter
- 16: Absatz
- 17: nach außen gerichteter Bord des Innenrings
- 18: nach innen gerichteter Bord des Außenrings
- 19: Absatz
- 20: Bord
- 21: Wälzlagerkäfig
- 22: Freilaufkäfig
- 23: Dichtring
- 24: Anlaufscheibe
- 25: Dichtring
- 26: Dichtring

## Patentansprüche

1. Freilaufriemenscheibe, mit einer Freilaufeinheit (2), welche einen mit einer Nabe (5) verbundenen Innenring (3) und einen mit einer von einer Brennkraftmaschine antreibbaren Antriebsscheibe (6) verbundenen Außenring (4) aufweist, wobei die Nabe (5) zur Verbindung mit einer Eingangswelle eines an einer ersten Stirnseite (11) der Nabe (5) angeordneten Nebenaggregats der Brennkraftmaschine vorgesehen ist, während die zweite Stirnseite (12) der Nabe (5) mit einem Deckel (13) verschlossen ist, und wobei der Innenring (3) auf dessen der zweiten Stirnseite (12) zugewandter Seite einen radial nach außen gerichteten Bord (17) und der Außenring (4) diesem Bord (17) benachbart einen radial nach innen gerichteten Bord (18) aufweist, welcher näher an der zweiten Stirnseite (12) angeordnet ist als der Bord (17) des Innenrings (3), **dadurch gekennzeichnet, dass** die Nabe (5) einen Absatz (19) aufweist, welcher einen Anschlag für den radial nach innen gerichteten Bord (18) des Außenrings (4) bildet.

2. Freilaufriemenscheibe nach Anspruch 1, **dadurch gekennzeichnet, dass** der radial nach innen gerichtete Bord (18) des Außenrings (4) an einer mit der Antriebsscheibe (6) verbundenen Anlaufscheibe (24) anschlägt.

3. Freilaufriemenscheibe nach Anspruch 1 oder 2, **gekennzeichnet durch** einen dem Bord (18) des Außenrings (4) benachbarten Dichtring (25, 26).

4. Freilaufriemenscheibe nach Anspruch 3, **gekennzeichnet durch** einen weiteren Dichtring (23), welcher auf der der ersten Stirnseite (11) der Nabe (5) zugewandten Seite der Freilaufeinheit (2) angeordnet ist.

5. Freilaufriemenscheibe nach Anspruch 4, **dadurch gekennzeichnet, dass** die beiden Dichtringe (23, 26) übereinstimmende Abmessungen aufweisen.

6. Freilaufriemenscheibe nach einem der Ansprüche 1 bis 5, **dadurch gekennzeichnet, dass** in dem zwischen dem Innenring (3) und dem Außenring (4) gebildeten Ringraum (7) sowohl Klemmelemente (8) als auch Wälzkörper (9) angeordnet sind.

7. Freilaufriemenscheibe nach Anspruch 6, **dadurch gekennzeichnet, dass** beidseitig einer Reihe von Klemmelementen (8) jeweils eine Reihe von Wälzkörpern (9) angeordnet ist.

8. Freilaufriemenscheibe nach einem der Ansprüche 1 bis 7, **dadurch gekennzeichnet, dass** die Freilaufeinheit (2) als Klemmrollenfreilauf ausgebildet ist.

9. Freilaufriemenscheibe nach einem der Ansprüche 1 bis 8, **dadurch gekennzeichnet, dass** mindestens eines der Teile Innenring (3) und Außenring (4) als spanlos umgeformtes Blechteil ausgebildet ist.

## Claims

1. Free-wheeling pulley wheel, having a free-wheeling unit (2) which has an inner ring (3) which is connected to a hub (5) and an outer ring (4) which is connected to a drive wheel (6) which can be driven by an internal combustion engine, the hub (5) being provided for connection to an input shaft of an auxiliary assembly of the internal combustion engine, which auxiliary assembly is arranged on a first end side (11) of the hub (5), while the second end side (12) of the hub (5) is closed by way of a cover (13), and the inner ring (3) having, on its side which faces the second end side (12), a radially outwardly directed flange (17), and the outer ring (4) having, adjacently to the said flange (17), a radially inwardly directed flange (18) which is arranged closer to the second end side (12) than the flange (17) of the inner ring (3), **characterized in that** the hub (5) has a shoulder (19) which forms a stop for the radially inwardly directed flange (18) of the outer ring (4).

2. Free-wheeling pulley wheel according to Claim 1, **characterized in that** the radially inwardly directed flange (18) of the outer ring (4) bears against a stop disc (24) which is connected to the drive wheel (6).

3. Free-wheeling pulley wheel according to Claim 1 or 2, **characterized by** a sealing ring (25, 26) which is adjacent to the flange (18) of the outer ring (4).

4. Free-wheeling pulley wheel according to Claim 3, **characterized by** a further sealing ring (23) which is arranged on that side of the free-wheeling unit (2) which faces the first end side (11) of the hub (5).

5. Free-wheeling pulley wheel according to Claim 4, **characterized in that** the two sealing rings (23, 26) have corresponding dimensions.

6. Free-wheeling pulley wheel according to one of Claims 1 to 5, **characterized in that** both clamping elements (8) and rolling bodies (9) are arranged in the annular space (7) which is formed between the inner ring (3) and the outer ring (4).

7. Free-wheeling pulley wheel according to Claim 6, **characterized in that** in each case one row of rolling bodies (9) is arranged on both sides of a row of clamping elements (8).

8. Free-wheeling pulley wheel according to one of Claims 1 to 7, **characterized in that** the free-wheeling unit (2) is configured as a clamping-roller free wheel.

9. Free-wheeling pulley wheel according to one of Claims 1 to 8, **characterized in that** at least one of the parts inner ring (3) and outer ring (4) is configured as a sheet-metal part which is formed without the removal of material.

## Revendications

1. Poulie à courroie à roue libre, comprenant une unité de roue libre (2) qui présente une bague intérieure (3) connectée à un moyeu (5) et une bague extérieure (4) connectée à un disque d'entraînement (6) pouvant être entraîné par un moteur à combustion interne, le moyeu (5) étant prévu pour être connecté à un arbre d'entrée d'un groupe auxiliaire du moteur à combustion interne disposé sur un premier côté frontal (11) du moyeu (5), tandis que le deuxième côté frontal (12) du moyeu (5) est fermé par un couvercle (13), la bague intérieure (3) présentant, sur son côté tourné vers le deuxième côté frontal (12), un bord (17) orienté radialement vers l'extérieur et la bague extérieure (4) présentant, à côté de ce bord (17), un bord (18) orienté radialement vers l'intérieur, qui est disposé plus près du deuxième côté frontal (12) que le bord (17) de la bague intérieure (3), **caractérisée en ce que** le moyeu (5) présente un épaulement (19) qui forme une butée pour le bord (18) orienté radialement vers l'intérieur de la bague extérieure (4).

2. Poulie à courroie à roue libre selon la revendication 1, **caractérisée en ce que** le bord (18) orienté radialement vers l'intérieur de la bague extérieure (4) bute contre un disque de butée (24) connecté au dispositif d'entraînement (6).

3. Poulie à courroie à roue libre selon la revendication 1 ou 2, **caractérisée par** une bague d'étanchéité (25, 26) adjacente au bord (18) de la bague extérieure (4).

4. Poulie à courroie à roue libre selon la revendication 3, **caractérisée par** une bague d'étanchéité supplémentaire (23) qui est disposée sur le côté de l'unité de roue libre (2) tourné vers le premier côté frontal (11) du moyeu (5).

5. Poulie à courroie à roue libre selon la revendication 4, **caractérisée en ce que** les deux bagues d'étanchéité (23, 26) présentent des dimensions correspondantes.

6. Poulie à courroie à roue libre selon l'une quelconque des revendications 1 à 5, **caractérisée en ce que** dans l'espace annulaire (7) formé entre la bague intérieure (3) et la bague extérieure (4) sont disposés à la fois des éléments de serrage (8) et des corps de roulement (9).

7. Poulie à courroie à roue libre selon la revendication 6, **caractérisée en ce que** de chaque côté d'une rangée d'éléments de serrage (8) est à chaque fois disposée une rangée de corps de roulement (9).

8. Poulie à courroie à roue libre selon l'une quelconque des revendications 1 à 7, **caractérisée en ce que** l'unité de roue libre (2) est réalisée sous forme de roue libre à rouleaux de serrage.

9. Poulie à courroie à roue libre selon l'une quelconque des revendications 1 à 8, **caractérisée en ce qu'**au moins l'une des pièces constituées par la bague intérieure (3) et la bague extérieure (4) est réalisée sous forme de pièce en tôle façonnée sans enlèvement de copeaux.
